# EUROPÄISCHE PATENTSCHRIFT

(11) **EP 1 801 462 B1**
(45) Veröffentlichungstag und Bekanntmachung des Hinweises auf die Patenterteilung: **09.02.2011**
(21) Anmeldenummer: 06024480.3
(22) Anmeldetag: 25.11.2006
(51) Int. Cl.: F16H 59/02

(54) **Getriebeschaltvorrichtung**
Shift control device for a transmission
Dispositif de changement de vitesse pour transmission

(30) Priorität: 24.12.2005 DE 102005062296
(43) Veröffentlichungstag der Anmeldung: 27.06.2007
(73) Patentinhaber: Dr. Ing. h.c. F. Porsche AG, 70435 Stuttgart (DE)
(72) Erfinder: Rettenmaier, Markus, Dr., 70195 Stuttgart (DE); Sickart, Michael, 71296 Heimsheim (DE)

(56) Entgegenhaltungen:
- DE-A1- 10 206 985
- DE-A1- 19 714 495
- DE-A1- 19 821 361
- DE-U1-202004 004 151

## Beschreibung

Die vorliegende Erfindung betrifft eine Schaltvorrichtung für ein automatisiertes oder automatisches Getriebe, insbesondere eines Kraftfahrzeugs, mit den Merkmalen des Oberbegriffs des Anspruchs 1.

Eine derartige Schaltvorrichtung ist aus der DE 20 2004 004 151 U1 bekannt und umfasst einen Schalthebel, der in einer Automatik-Schaltgasse zum Umschalten zwischen Automatik-Betriebsstellungen verstellbar ist und der über eine Quergasse in eine Tip-Schaltgasse überführbar ist, in der er zum Umschalten zwischen Getriebegängen verstellbar ist. Dabei weist der Schalthebel in der Tip-Schaltgasse eine stabile Betriebsposition auf, in welche der Schalthebel aus allen labilen Positionen der drei Gassen selbsttätig zurückkehrt.

Bei der bekannten Schaltvorrichtung umfasst die Automatik-Schaltgasse eine Vorwärts-Betriebsstellung, eine Rückwärts-Betriebsstellung und eine zwischen den genannten Betriebsstellungen liegende Leerlauf-Betriebsstellung, die im Kreuzungspunkt zwischen der Quergasse und der Automatik-Schaltgasse positioniert ist. Desweiteren ist die stabile Betriebsposition im Kreuzungspunkt zwischen der Quergasse und der Tip-Schaltgasse positioniert. Zum Aktivieren des Vorwärtsbetriebs muss der Schalthebel aus der stabilen Betriebsposition über die Leerlauf-Betriebsstellung in die Vorwärts-Betriebsstellung überführt werden. Nach dem Loslassen des Schalthebels kehrt dieser selbsttätig über die Leerlauf-Betriebsstellung wieder in die stabile Betriebsposition zurück. Um hier Fehlschaltungen zu vermeiden, ist der Schalthebel bei der bekannten Schaltvorrichtung als Tip-Schalter ausgestaltet, der zum Aktivieren der jeweils ausgewählten Betriebsstellung niedergedrückt werden muss. Hierdurch kann das bloße Anfahren oder Überfahren einer Betriebsstellung noch nicht zu deren Aktivierung führen.

Aus der DE 197 14 459 A1 ist eine andere Schaltvorrichtung bekannt, bei welcher ein Schalthebel über eine Quergasse von einer Automatik-Schaltgasse in eine Tip-Schaltgasse überführbar ist. Die beiden Kreuzungspunkte zwischen den drei Gassen bilden dabei stabile Positionen, während die übrigen Schaltstellungen instabile Positionen bilden, aus denen der Schalthebel in die jeweils benachbarte stabile Schaltposition selbsttätig zurückkehrt.

Aus der DE gattungsgemäßen 102 06 985 A1 ist eine weitere Schaltvorrichtung bekannt, bei der ein Schalthebel in zwei über eine Quergasse miteinander verbundene Schaltgassen zum Auswählen von Getriebegängen bzw. von Automatik-Betriebszuständen verstellbar ist. Die bekannte Schaltvorrichtung ist monostabil und weist für den Schalthebel nur eine einzige stabile Position auf. Zum Auswählen eines Getriebegangs bzw. eines Automatik-Betriebszustands wird der Schalthebel manuell aus seiner stabilen Position in der einen oder in der anderen Schaltgasse in die jeweils gewünschte Schaltposition ausgelenkt. Anschließend kehrt der Schalthebel nach dem Loslassen aus jeder möglichen Auslenkstellung selbsttätig in die stabile Position zurück.

Die vorliegende Erfindung beschäftigt sich mit dem Problem, für eine Schaltvorrichtung der eingangs genannten Art eine verbesserte Ausführungsform anzugeben, die sich insbesondere durch eine einfache Bedienbarkeit und eine hohe Betriebssicherheit auszeichnet.

Dieses Problem wird erfindungsgemäß durch die Gegenstände der unabhängigen Ansprüche gelöst. Vorteilhafte Ausführungsform sind Gegenstand der abhängigen Ansprüche.

Die Erfindung beruht bei einer ersten Lösung auf dem allgemeinen Gedanken, den durch die Betätigung des Schalthebels ausgewählten Getriebegang bzw. Betriebszustand erst dann zu aktivieren, wenn der Schalthebel in seine stabile Betriebsposition in der Tip-Schaltgasse zurückgekehrt ist. Ein versehentliches Aktivieren eines unerwünschten Betriebszustands lässt sich dadurch vermeiden.

Bei einer zweiten Lösung, die alternativ oder kumulativ zur ersten Lösung realisierbar ist, beruht die Erfindung auf dem allgemeinen Gedanken, zumindest eine Einbahn-Gasse bereitzustellen, über welche der Schalthebel unter Umgehung der Quergasse aus der Automatik-Schaltgasse in die Tip-Schaltgasse bzw. in die stabile Betriebsposition überführbar ist. Auf diese Weise lässt sich insbesondere eine labile Betriebsstellung umgehen, die im Kreuzungspunkt zwischen Automatik-Schaltgasse und Quergasse angeordnet ist. Die so umgehbare labile Betriebsstellung lässt somit nicht versehentlich beim Zurückführen des Schalthebels aktivieren. Durch diese Bauweise wird außerdem erreicht, dass der Schalthebel nicht als Tip-Schalter ausgestaltet werden muss, was den Bedienkomfort erhöht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugtes Ausführungsbeispiel der Erfindung ist in der Zeichnung dargestellt und wird in der nachfolgenden Beschreibung näher erläutert.

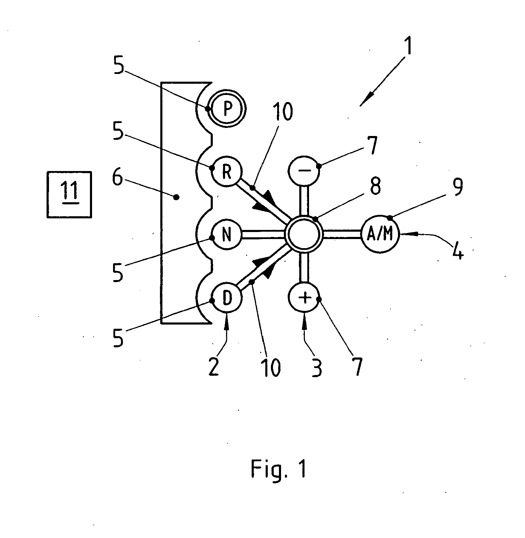

Die einzige Fig. 1 zeigt eine schaltplanartige Prinzipskizze einer Schaltvorrichtung.

Entsprechend Fig. 1 umfasst eine erfindungsgemäße Schaltvorrichtung 1 einen nicht dargestellten Schalthebel sowie eine Automatik-Schaltgasse 2, eine Tip-Schaltgasse 3 und eine Quergasse 4. Die Automatik-Schaltgasse 2 und die Tip-Schaltgasse 3 sind zueinander parallel orientiert, während die Quergasse 4 im wesentlichen senkrecht zu den beiden anderen Gassen 2, 3 orientiert ist und die beiden anderen Gassen 2, 3 in zwei Kreuzungspunkten kreuzt.

Die Schaltvorrichtung 1 dient zum elektrischen oder elektronischen Betätigen eines automatischen oder automatisierten, nicht gezeigten Getriebes, so genanntes Shift-By-Wire-Getriebe. Des weiteren handelt es sich bei diesem Getriebe üblicherweise um ein Lastschaltgetriebe, das also unter Last geschaltet werden kann, ohne dass hierzu vom Fahrzeugführer eine Kupplung betätigt werden muss.

In der Automatik-Schaltgasse 2 sind mehrere Automatik-Betriebsstellungen 5 angeordnet. Üblicherweise handelt es sich hierbei zumindest um eine Leerlauf-Betriebsstellung N, um eine Vorwärts-Betriebsstellung D und um eine Rückwärts-Betriebsstellung R. Im vorliegenden Fall ist außerdem zusätzlich eine Park- oder Ruhe-Betriebsstellung P vorgesehen. In der stabilen Ruheposition P ist eine Parksperre des Getriebes aktiviert, so dass das damit ausgestattete Fahrzeug nicht wegrollen kann.

Zweckmäßig ist die Leerlauf-Betriebsstellung N in einem Kreuzungspunkt zwischen der Quergasse 4 und der Automatik-Schaltgasse 2 positioniert. Gleichzeitig ist die Leerlauf-Betriebsstellung N zwischen der Vorwärts-Betriebsstellung D und der Rückwärts-Betriebsstellung R angeordnet, so dass ein Umschalten zwischen einem Vorwärts-Betriebszustand und einem Rückwärts-Betriebszustand und umgekehrt nur über die Leerlauf-Betriebsstellung N möglich ist. Des weiteren ist hier die Rückwärts-Betriebsstellung R zwischen der Ruhe-Betriebsstellung P und der Leerlauf-Betriebsstellung N positioniert.

Die Schaltvorrichtung 1 ist hier außerdem mit einer Rasteinrichtung 6 ausgestattet, die der Automatik-Schaltgasse 2 zugeordnet ist. Diese Rasteinrichtung 6 ist dabei so ausgestaltet, dass sie einer Person, die den Schalthebel von Hand betätigt, haptisch signalisiert, wenn der Schalthebel eine der Automatik-Betriebsstellungen 5 erreicht oder überfährt. Beispielsweise erzeugt die Rasteinrichtung 6 von der jeweiligen Position des Schalthebels abhängige, der Verstellbewegung entgegen wirkende Widerstandskräfte.

Die Tip-Schaltgasse 3 weist zwei Tip-Positionen 7 auf, nämlich eine zum Zurückschalten vorgesehene Minus-Stellung und eine zum Hochschalten vorgesehen Plus-Stellung. Des weiteren umfasst die Tip-Schaltgasse 3 eine stabile Betriebsposition 8. Diese ist zweckmäßig im Kreuzungspunkt zwischen der Tip-Schaltgasse 3 und der Quergasse 4 positioniert. Des weiteren ist die stabile Betriebsposition 8 zwischen den beiden Tip-Positionen 7 angeordnet.

Schließlich ist die Schaltvorrichtung 1 bei der hier gezeigten, bevorzugten Ausführungsform mit einer Schaltposition 9 ausgestattet, die in der Quergasse 4 angeordnet ist und zwar bezüglich der Tip-Schaltgasse 3 auf einer von der Automatik-Schaltgasse 2 abgewandten Seite. Dementsprechend ist die stabile Betriebsposition 8 zwischen der Leerlauf-Betriebsstellung N und der Schaltposition 9 angeordnet. Die Schaltposition 9 dient zum Umschalten zwischen einem Automatikmodus A und einem Manualmodus M. Im Automatikmodus A kann der Fahrzeugführer im Vorwärts-Betriebszustand die aktuelle Gangstellung des Getriebes durch Betätigen des Schalthebels vorübergehend verändern. Hierzu bewegt der Fahrzeugführer den Schalthebel aus der stabilen Betriebsposition 8 zum Runterschalten in die Minus-Stellung und zum Hochschalten in die Plus-Stellung. Im Manualmodus M muss der Fahrzeugführer zumindest bei Vorwärtsfahrt sämtliche Getriebegänge selbst schalten, indem er den Schalthebel in die Minus-Stellung bzw. in die Plus-Stellung überführt.

Der Schalthebel ist in den Gassen 2, 3, 4 verstellbar, wodurch die einzelnen Automatik-Betriebsstellung 5 der Automatik-Schaltgasse 2 sowie die einzelnen Tip-Positionen 7 der Tip-Schaltgasse 3 und außerdem die Schaltposition 9 der Quergasse 4 auswählbar sind.

Die stabile Betriebsposition 8 charakterisiert sich dadurch, dass der Schalthebel aus allen labilen Positionen der drei Gassen 2, 3, 4 selbsttätig in die stabile Betriebsposition 8 zurückkehrt. Erreicht wird dies beispielsweise über entsprechende Federeinrichtungen. Vorzugsweise sind die Leerlauf-Betriebsstellung N, die Rückwärts-Betriebsstellung R und die Vorwärts-Betriebsstellung D als labile Betriebspositionen ausgestaltet. Ebenso sind die beiden Tip-Positionen 7 und - soweit vorhanden - die Schaltposition 9 als labile Positionen ausgestaltet. Bei der hier gezeigten, bevorzugten Ausführungsform ist neben der stabilen Betriebsposition 8 nur noch die Ruheposition P als stabile Position ausgestaltet, die jedoch im Unterschied zur stabilen Betriebsposition 8 keine Rückkehrfunktion aufweist, d.h., der aus der Ruheposition P ausgelenkte Schalthebel kommt nicht automatisch in die Ruheposition P zurück, sondern muss stets manuell in die Ruheposition P verstellt werden, in der er dann allerdings selbsttätig verbleibt. Die beiden stabilen Positionen sind in Fig. 1 durch Doppelkreise symbolisiert, während die labilen Positionen durch Einfachkreise angedeutet sind.

Die erfindungsgemäße Schaltvorrichtung 1 zeichnet sich außerdem durch wenigstens eine Einbahn-Gasse 10 aus. Im vorliegenden Fall sind zwei derartige Einbahn-Gassen 10 vorgesehen. Jede Einbahn-Gasse 10 verbindet eine außerhalb der Quergasse 4 liegende labile Betriebsstellung 5 mit der Tip-Schaltgasse 3 bzw. mit der stabilen Betriebsposition 8. Durch diese Einbahn-Gassen 10 kann der Schalthebel nur in einer Richtung, nämlich zur stabilen Betriebsposition 8 hin verstellt werden, also nicht in der Gegenrichtung. Die Überführung des Schalthebels von der Tip-Schaltgasse 3 bzw. von der stabilen Betriebsposition 8 in die Automatik-Schaltgasse 2 ist aufgrund der Einbahn-Funktion der Einbahn-Gassen 10 nur über die Quergasse 4 möglich. Bei der hier gezeigten Konfiguration wird somit zum Auswählen einer Automatik-Betriebsstellung 5 in jedem Fall die Leerlauf-Betriebsstellung N erreicht bzw. überfahren. Wird nun der Schalthebel nach dem Auswählen einer außerhalb der Quergasse 4 liegenden labilen Betriebsstellung, also hier der Vorwärts-Betriebsstellung D oder der Rückwärts-Betriebsstellung R losgelassen, stellt sich der Schalthebel selbsttätig über die jeweilige Einbahn-Gasse 10 in die stabile Betriebsposition 8 zurück. Der automatische Rückstellvorgang erfolgt somit nicht über die Quergasse 4 und somit nicht über die darin angeordnete Betriebsstellung 5, also die Leerlauf-Betriebsstellung N. Ein versehentliches Aktivieren der so umgegangen Betriebsstellung 5 , also der Leerlauf-Betriebsstellung N wird dadurch vermieden. Aktiviert wird somit stets derjenige Betriebszustand, aus dessen Betriebsstellung 5 der Schalthebel selbsttätig in die stabile Betriebsposition 8 zurückkehrt.

Bei einer alternativen Ausführungsform der erfindungsgemäßen Schaltvorrichtung 1, die jedoch auch kumulativ mit der zuvor beschriebenen Ausführungsform realisierbar ist, kann eine nur symbolisch angedeutete Getriebesteuerung 11 vorgesehen sein, die in Abhängigkeit der mit dem Schalthebel getätigten Auswahlvorgänge das Getriebe entsprechend ansteuert. Erfindungsgemäß ist diese Getriebesteuerung 11 nun so ausgestaltet, dass sie nach dem Auswählen einer Automatik-Betriebsstellung 5 mit Hilfe des Schalthebels erst dann die ausgewählte Automatik-Betriebsstellung 5 aktiviert, wenn der Schalthebel wieder seine stabile Betriebsposition 8 einnimmt. Auf diese Weise ist sichergestellt, dass beispielsweise beim Einstellen und Verweilen in der Leerlauf-Betriebsstellung N diese nicht bereits dadurch aktiviert wird, sondern erst dann, wenn der Schalthebel wieder in die stabile Betriebsposition 8 zurückkehrt. Vor allem in Verbindung mit den Einbahn-Gassen 10 kann somit eine hohe Betriebssicherheit erreicht werden, bei der sich unerwünschte Schaltzustände weitgehend vermeiden lassen.

Bei einer besonders vorteilhaften Weiterbildung kann die Getriebesteuerung 11 unabhängig von der zuvor beschriebenen Schaltverzögerung so ausgestaltet sein, dass sie einen Freischaukelmodus aktiviert, wenn der Schalthebel direkt von der Vorwärts-Betriebsstellung D über die Leerlauf-Betriebsstellung N in die Rückwärts-Betriebsstellung R oder umgekehrt verstellt wird. Eine "direkte Verstellung" liegt im vorliegenden Zusammenhang dann vor, wenn diese ohne zwischenzeitliche Rückführung des Schalthebels in die stabile Betriebsposition 8 erfolgt. Dieser Freischaukelmodus ermöglicht ein schnelles Wechseln der Fahrtrichtung bei an sich noch stehendem Fahrzeug, um das im Gelände oder in Schnee festsitzende Fahrzeug durch abwechselndes Vor- und Zurückstoßen frei zu bekommen. Diese hin- und herwiegende Fahrzeugbewegung wird als Freischaukeln bezeichnet.

Dieser Freischaukelmodus wird von der Getriebesteuerung 11 insbesondere dann aktiviert, wenn nach dem direkten Umschalten zwischen der Vorwärts-Betriebsstellung D und der Rückwärts-Betriebsstellung R der Schalthebel nicht oder nicht innerhalb einer vorbestimmten Zeit in die stabile Betriebsposition 8 zurückkehrt. Zweckmäßig wird dieser Freischaukelmodus solange aufrecht erhalten, bis der Schalthebel wieder in die stabile Betriebsposition 8 zurückgelangt.

Während des Freischaukelmodus lässt sich das Fahrzeug besonders rasch zwischen den beiden Fahrtrichtungen umschalten, wobei dies insbesondere bei reduzierter Motorleistung des Fahrzeugs erfolgt.

## Patentansprüche

1. Schaltvorrichtung für ein automatisiertes oder automatisches Getriebe, insbesondere eines Kraftfahrzeugs, mit einer Getriebesteuerung (11) und einem Schalthebel, wobei
- der Schalthebel in einer Automatik-Schaltgasse (2) zum Umschalten zwischen Automatik-Betriebsstellungen (5) verstellbar ist und der über eine Quergasse (4) in eine Tip-Schaltgasse (3) überführbar ist, in der er zum Umschalten zwischen Getriebegängen verstellbar ist,
- wobei der Schalthebel in der Tip-Schaltgasse (3) eine stabile Betriebsposition (8) aufweist, in welche der Schalthebel aus allen labilen Positionen der drei Gassen (2, 3, 4) selbsttätig zurückkehrt,
**dadurch gekennzeichnet, dass**
die Getriebesteuerung (11) so ausgestaltet ist, dass sie nach dem Auswählen einer labilen Automatik-Betriebsstellung (5) erst dann in den ausgewählten Automatik-Betriebszustand umschaltet, wenn der Schalthebel wieder seine stabile Betriebsposition (8) in der Tip-Schaltgasse (3) einnimmt.

2. Schaltvorrichtung nach dem Oberbegriff des Anspruchs 1, insbesondere nach Anspruch 1, **dadurch gekennzeichnet,**
- **dass** der Schalthebel aus der Tip-Schaltgasse (3) ausschließlich über die Quergasse (4) in die Automatik-Schaltgasse (2) überführbar ist,
- **dass** der Schalthebel aus der Automatik-Schaltgasse (2) über die Quergasse (4) und zusätzlich über wenigstens eine Einbahn-Gasse (10) in die Tip-Schaltgasse (3) überführbar ist.

3. Schaltvorrichtung nach Anspruch 2,
**dadurch gekennzeichnet,**
- **dass** die Automatik-Betriebsstellungen (5) eine Leerlauf-Betriebsstellung (N) umfassen, die im Kreuzungspunkt zwischen der Quergasse (4) und der Automatik-Schaltgasse (2) positioniert und als labile Position ausgestaltet ist,
- **dass** die Automatik-Betriebsstellungen (5) zumindest eine weitere als labile Position ausgestaltete Betriebsstellung (R, D) umfassen, von der aus der Schalthebel über die wenigstens eine Einbahn-Gasse (10) zur Tip-Schaltgasse (3) rückführbar ist.

4. Schaltvorrichtung nach Anspruch 2 oder 3,
**dadurch gekennzeichnet,**
- **dass** für jede außerhalb der Quergasse (4) liegende, als labile Position ausgestaltete Betriebsstellung (R, D) der Automatik-Betriebsstellungen (5) eine eigene Einbahn-Gasse (10) vorgesehen ist, durch die der Schalthebel zur Tip-Schaltgasse (3) überführbar ist, und/oder
- **dass** die selbsttätige Rückstellung des Schalthebels aus einer außerhalb der Quergasse (4) liegenden, als labile Position ausgestaltete Betriebsstellung (R, D) der Automatik-Betriebsstellungen (5) ausschließlich über die dieser Betriebsstellung (R, D) zugeordnete Einbahn-Gasse (10) erfolgt, und/oder
- **dass** die Automatik-Betriebsstellungen (5) eine Vorwärts-Betriebsstellung (D) umfassen, die als labile Position ausgestaltet ist, und/oder
- **dass** die Automatik-Betriebsstellungen (5) eine Rückwärts-Betriebsstellung (R) umfassen, die als labile Position ausgestaltet ist.

5. Schaltvorrichtung nach einem der Ansprüche 2 bis 4,
**dadurch gekennzeichnet,**
- **dass** jede Einbahn-Gasse (10) den Schalthebel von der Automatik-Schaltgasse (2) in die stabile Betriebsposition (8) überführt, und/oder
- **dass** die stabile Betriebsposition (8) im Kreuzungspunkt zwischen Tip-Schaltgasse (3) und Quergasse (4) positioniert ist.

6. Schaltvorrichtung nach einem der Ansprüche 1 bis 5,
**dadurch gekennzeichnet,**
- **dass** der Schalthebel eine stabile Ruheposition (P) aufweist, in der eine Parksperre des Getriebes aktiviert ist, und
- **dass** die stabile Ruheposition (P) in der Automatik-Schaltgasse (2) angeordnet ist.

7. Schaltvorrichtung nach einem der Ansprüche 1 bis 6,
**dadurch gekennzeichnet,**
- **dass** der Schalthebel eine in der Quergasse (4) angeordnete labile Schaltposition (9) zum Umschalten zwischen einem Automatikmodus (A) und einem Manualmodus (M) aufweist, und
- **dass** die stabile Betriebsposition (8) in der Quergasse (4) zwischen der Schaltposition (9) und der Automatik-Schaltgasse (2) positioniert ist.

8. Schaltvorrichtung nach einem der Ansprüche 1 bis 7, **dadurch gekennzeichnet, dass** die Getriebesteuerung (11) bei einem direkten Umwählen zwischen einer Vorwärts-Betriebsstellung (D) und einer Rückwärts-Betriebsstellung (R) in einen Freischaukelmodus umschaltet und das Einlegen des jeweils entsprechenden Getriebegangs veranlasst, wenn und/oder solange der Schalthebel nicht in die stabile Betriebsposition (8) zurückkehrt.

9. Schaltvorrichtung nach einem der Ansprüche 1 bis 8, **dadurch gekennzeichnet, dass** eine Rasteinrichtung (6) vorgesehen ist, die zumindest der Automatik-Schaltgasse (2) zugeordnet ist und das Erreichen und Überfahren der Automatik-Betriebsstellungen (5) haptisch signalisiert.

## Claims

1. Selector device for an automated or automatic transmission, in particular of a motor vehicle, having a transmission controller (11) and a selector lever,
- the selector lever being adjustable in an automatic selector gate (2) to switch between automatic operating positions (5) and being able to be moved via a transverse gate (4) into a tip-action selector gate (3) in which it is adjustable to shift between transmission gears,
- the selector lever having one stable operating position (8) in the tip-action selector gate (3), to which stable operating position (8) the selector lever automatically returns from all the labile positions of the three gates (2, 3, 4),
**characterized in that**
the transmission controller (11) is configured such that, after a labile automatic operating position (5) is selected, it only switches to the selected automatic operating state when the selector lever resumes its stable operating position (8) in the tip-action selector gate (3).

2. Selector device according to the preamble of Claim 1, in particular according to Claim 1, **characterized**
- **in that** the selector lever can be moved from the tip-action selector gate (3) into the automatic selector gate (2) only via the transverse gate (4),
- **in that** the selector lever can be moved from the automatic selector gate (2) into the tip-action selector gate (3) via the transverse gate (4) and additionally via at least one one-way gate (10).

3. Selector device according to Claim 2, **characterized**
- **in that** the automatic operating positions (5) comprise an idle operating position (N) which is positioned in the point of intersection between the transverse gate (4) and the automatic selector gate (2) and is configured as a labile position,
- **in that** the automatic operating positions (5) comprise at least one further operating position (R, D) which is configured as a labile position and from which the selector lever can be moved back to the tip-action selector gate (3) via the at least one one-way gate (10).

4. Selector device according to Claim 2 or 3, **characterized**
- **in that** a separate one-way gate (10), by means of which the selector lever can move back to the tip-action selector gate (3), is provided for each operating position (R, D), which is configured as a labile position, of the automatic operating positions (5) situated outside the transverse gate (4), and/or
- **in that** the selector lever automatically returns from an operating position (R, D), which is configured as a labile position, of the automatic operating positions (5) situated outside the transverse gate (4) only via the one-way gate (10) assigned to said operating position (R, D), and/or
- **in that** the automatic operating positions (5) comprise a forward operating position (D) which is configured as a labile position, and/or
- **in that** the automatic operating positions (5) comprise a reverse operating position (R) which is configured as a labile position.

5. Selector device according to one of Claims 2 to 4, **characterized**
- **in that** each one-way gate (10) moves the selector lever from the automatic selector gate (2) into the stable operating position (8), and/or
- **in that** the stable operating position (8) is positioned in the point of intersection between the tip-action selector gate (3) and the transverse gate (4).

6. Selector device according to one of Claims 1 to 5, **characterized**
- **in that** the selector lever has a stable rest position (P) in which a parking lock of the transmission is activated, and
- **in that** the stable rest position (P) is arranged in the automatic selector gate (2).

7. Selector device according to one of Claims 1 to 6, **characterized**
- **in that** the selector lever has a labile switching position (9), for switching between an automatic mode (A) and a manual mode (M), arranged in the transverse gate (4), and
- **in that** the stable operating position (8) is positioned in the transverse gate (4) between the switching position (9) and the automatic selector gate (2).

8. Selector device according to one of Claims 1 to 7, **characterized in that** the transmission controller (11) switches to a rock-free mode in the event of a direct shift between a forward operating position (D) and a reverse operating position (R), and permits the engagement of the in each case corresponding transmission gear if and/or as long as the selector lever does not return to the stable operating position (8).

9. Selector device according to one of Claims 1 to 8, **characterized in that** a notched device (6) is provided which is assigned at least to the automatic selector gate (2) and provides a haptic indication of when the automatic operating positions (5) are attained and traversed.

## Revendications

1. Dispositif de changement de vitesse pour une boîte de vitesses automatisée ou automatique, notamment d'un véhicule automobile, avec une commande de boîte de vitesses (11) et un levier de changement de vitesse :
le levier de changement de vitesse pouvant être déplacé dans un couloir de sélection de vitesse automatique (2) pour passer entre différentes positions de fonctionnement automatiques (5) et pouvant être transféré, par l'intermédiaire d'un couloir transversal (4), dans un couloir de sélection de vitesse incliné (3) dans lequel il peut être déplacé pour passer entre les différents rapports de changement de vitesse ;
le levier de changement de vitesse présentant dans le couloir de sélection de vitesse incliné (3) une position de fonctionnement (8) stable dans laquelle le levier de changement de vitesse revient automatiquement de toutes les positions instables des trois couloirs (2, 3, 4) ;
**caractérisé en ce que** :
la commande de boîte de vitesses (11) est réalisée de telle sorte qu'elle ne passe, après sélection d'une position de fonctionnement automatique (5) instable, dans l'état de mode automatique sélectionné que lorsque le levier de changement de vitesse reprend sa position de fonctionnement (8) stable dans le couloir de sélection de vitesse incliné (3).

2. Dispositif de changement de vitesse selon le préambule de la revendication 1, notamment selon la revendication 1, **caractérisé en ce que** :
le levier de changement de vitesse ne peut passer du couloir de sélection de vitesse incliné (3) au couloir de sélection de vitesse automatique (2) que par le biais du couloir transversal (4) ;
le levier de changement de vitesse ne peut passer du couloir de sélection de vitesse automatique (2) au couloir de sélection de vitesse incliné (3) que par le biais du couloir transversal (4) et en outre par le biais d'au moins un couloir à une voie (10).

3. Dispositif de changement de vitesse selon la revendication 2, **caractérisé en ce que** :
les positions de fonctionnement automatiques (5) comportent une position de fonctionnement au point mort (N) positionnée au point d'intersection entre le couloir transversal (4) et le couloir de sélection de vitesse automatique (2) et réalisée sous la forme d'une position instable ;
les positions de fonctionnement automatiques (5) comprennent au moins une autre position de fonctionnement (R, D) réalisée comme une position instable d'où le levier de changement de vitesse peut être ramené au couloir de sélection de vitesse incliné (3) via l'au moins un couloir à une voie (10).

4. Dispositif de changement de vitesse selon la revendication 2 ou 3, **caractérisé en ce que** :
pour chaque position de fonctionnement (R, D) reposant à l'extérieur du couloir transversal (4) et prenant la forme d'une position instable parmi les positions de fonctionnement automatiques (5), un couloir à une voie (10) propre est prévu à travers lequel le levier de changement de vitesse peut passer au couloir de sélection de vitesse incliné (3) ; et/ou
le retour automatique du levier de changement de vitesse d'une position de fonctionnement (R, D) située à l'extérieur du couloir transversal (4) et prenant la forme d'une position instable parmi les positions de fonctionnement automatiques (5) se produit exclusivement par l'intermédiaire du couloir à une voie (10) associé à cette position de fonctionnement (R, D) ; et/ou
les positions de fonctionnement automatiques (5) comportent une position de fonctionnement en marche avant (D) prenant la forme d'une position instable; et/ou
les positions de fonctionnement automatiques (5) comportent une position de fonctionnement en marche arrière (R) prenant la forme d'une position instable.

5. Dispositif de changement de vitesse selon l'une quelconque des revendications 2 à 4, **caractérisé en ce que** :
chaque couloir à une voie (10) transmet le levier de changement de vitesse du couloir de sélection de vitesse automatique (2) à la position de fonctionnement (8) stable ; et/ou
la position de fonctionnement (8) stable est positionnée au point d'intersection entre le couloir de sélection de vitesse incliné (3) et le couloir transversal (4).

6. Dispositif de changement de vitesse selon l'une quelconque des revendications 1 à 5, **caractérisé en ce que** :
le levier de changement de vitesse présente une position de repos (P) stable dans laquelle un verrouillage de stationnement de la boîte de vitesses est activé ; et/ou
la position de repos (P) stable est agencée dans le couloir de sélection de vitesse automatique (2).

7. Dispositif de changement de vitesse selon l'une quelconque des revendications 1 à 6, **caractérisé en ce que** :
le levier de changement de vitesse est doté d'une position de changement de vitesse (9) prévue dans le couloir transversal (4) instable pour passer entre un mode automatique (A) et un mode manuel (M) ; et
la position de fonctionnement (8) stable est positionnée dans le couloir transversal (4) entre la position de changement de vitesse (9) et le couloir de sélection de vitesse automatique (2).

8. Dispositif de changement de vitesse selon l'une quelconque des revendications 1 à 7, **caractérisé en ce que** la commande de boîte de vitesses (11) peut être commutée dans un mode de balancement libre lors d'un changement de vitesse direct entre une position de fonctionnement en marche avant (D) et une position de fonctionnement en marche arrière (R) et provoque le passage du rapport de changement de vitesse respectivement correspondant dès lors et/ou tant que le levier de changement de vitesse ne revient pas dans la position de fonctionnement (8) stable.

9. Dispositif de changement de vitesse selon l'une quelconque des revendications 1 à 8, **caractérisé en ce qu'**un dispositif d'arrêt (6) associé au moins au couloir de sélection de vitesse automatique (2) et signale par contact lorsque les positions de fonctionnement automatiques (5) sont atteintes ou dépassées.
